# FASCICULE DE BREVET EUROPEEN

(11) **EP 0 556 089 B1**
(45) Date de publication et mention de la délivrance du brevet: **27.11.1996**
(21) Numéro de dépôt: 93400267.6
(22) Date de dépôt: 03.02.1993
(51) Int. Cl.: D04H 3/07, D04H 1/00, B29C 70/00, B29D 31/00

(54) **Procédé pour la réalisation d'une armature de fibres pour pièce de matière composite à parois non coplanaires, et pièce composite comportant une telle armature**
Verfahren zur Herstellung einer Faserverstärkung für ein Teil aus Verbundmaterial mit nicht-koplanaren Seiten und Verbundteile mit einer solchen Verstärkung
Method of fabricating a fibre reinforcement for a composite structure with uncoplanar sides and structural composite with the same reinforcement

(30) Priorité: 11.02.1992 FR 9201511
(43) Date de publication de la demande: 18.08.1993
(73) Titulaire: AEROSPATIALE Société Nationale Industrielle, 75781 Paris Cédex 16 (FR)
(72) Inventeur: Cahuzac, Georges, F-33110 Le Bouscat (FR)
(74) Mandataire: Bonnetat, Christian

(56) Documents cités:
- EP-A- 0 056 351
- EP-A- 0 272 083
- EP-A- 0 284 497
- EP-A- 0 444 971
- WO-A-80/02254
- US-A- 4 622 254
- US-A- 4 992 317

## Description

La présente invention concerne un procédé pour la réalisation d'armatures de fibres (carbone, verre, bore, etc...) pour des pièces de matière composite, ainsi que les armatures obtenues par la mise en oeuvre dudit procédé.

On connaît de nombreux procédés pour obtenir de telles pièces de matière composite, constituées d'une armature de fibres noyée dans une matrice durcie. On commence par réaliser une armature de telles fibres distribuées suivant au moins deux directions, après quoi on introduit la matière de ladite matrice dans ladite armature et on durcit ladite matière pour former la matrice.

Par le brevet EP-A-0 073 648 (US-A-4 622 254), il est déjà connu de réaliser une telle armature fibreuse par assemblage par couture d'une pluralité d'éléments fibreux individuels. Notamment, en regard de la figure 9 de ce document antérieur, il est décrit un procédé pour la réalisation d'une armature fibreuse pour une pièce de matière composite comportant au moins deux parois orthogonales, procédé selon lequel on réalise des éléments fibreux respectivement représentatifs desdites parois, on applique un desdits éléments fibreux contre une face de l'autre et on solidarise, par des points de piqûre, lesdits éléments fibreux entre eux.

La technique décrite par le brevet EP-A-0 073 648 présente des inconvénients.

Tout d'abord, pour la réalisation desdits éléments fibreux, elle fait appel à des nappes de tissu liées entre elles par des lignes de couture, ce qui complique fortement la réalisation de ladite armature fibreuse.

De plus, cette technique nécessite que l'un des éléments fibreux comporte des ailes latérales auxiliaires lui servant d'appui contre ladite face de l'autre desdits éléments fibreux et nécessaires pour la liaison de ces éléments. Il en résulte que ces ailes latérales constituent des surépaisseurs de ladite face de l'autre desdits éléments fibreux, de telles surépaisseurs étant toujours gênantes et influant sur les caractéristiques mécaniques et physiques dudit autre élément.

On remarquera, par ailleurs, que l'élément fibreux à ailes latérales :
- travaille mal en flexion, notamment au niveau du raccord entre lesdites ailes et le reste desdits éléments ;
- interdit à l'autre élément, contre lequel il est appliqué et fixé, de présenter une courbure trop importante (ce qui interdit par exemple la réalisation d'une pièce dans laquelle ledit élément à ailes latérales formerait un raidisseur pour un dôme, formé par l'autre élément) ;
- interdit la présence de points de piqûre dans ledit élément fibreux, ailleurs que dans les ailes de celui-ci, ce qui crée une hétérogénéité.

La présente invention a pour objet de remédier à ces inconvénients. Elle permet de simplifier la réalisation d'armatures fibreuses comportant des parois non coplanaires, par exemple orthogonales, de réaliser des pièces à forte courbure, de supprimer lesdites ailes auxiliaires de liaison. Elle permet, notamment, de réaliser de façon satisfaisante des pièces composites semblables à celles en alliage léger réalisées en tôlerie d'aviation et comprenant des panneaux, plans ou courbes, renforcés par des nervures, ainsi que des pièces fonctionnelles telles que des ferrures.

A cette fin, selon l'invention, le procédé pour la réalisation d'une armature fibreuse pour une pièce de matière composite comportant au moins deux parois non coplanaires, procédé selon lequel on réalise des premier et second éléments fibreux respectivement représentatifs desdites parois, on applique ledit premier élément fibreux contre une première face du second et on solidarise, par des points de piqûre, lesdits éléments fibreux entre eux en introduisant un fil continu à l'aide d'une aiguille à travers une seconde face dudit second élément, opposée à ladite première face, est caractérisé en ce que au moins ledit premier élément fibreux est réalisé en un matelas de fibres, en ce que ledit premier élément fibreux est appliqué par un de ses chants contre ladite première face dudit second élément et en ce que ledit fil continu est introduit par piquage sans nouage dudit fil continu pour que lesdits points de piqûre solidarisant entre eux lesdits premier et second éléments fibreux forment des fibres transversales traversant ledit second élément et pénétrant dans ledit chant dudit premier élément.

Ainsi, selon l'invention, grâce auxdits points de piqûre, les deux éléments fibreux non coplanaires forment une armature monolithique.

De préférence, afin d'assurer audit premier élément une bonne cohésion transversale, permettant de le manipuler et de le piquer sans éclatement dudit chant, il est avantageux que ledit matelas de fibres dudit premier élément fibreux comporte des fibres de direction au moins sensiblement parallèles à l'épaisseur dudit matelas de fibres.

On remarquera qu'il est alors possible de découper ledit premier élément fibreux dans ledit matelas de fibres, de sorte que le chant dudit premier élément fibreux peut être adapté à la forme de ladite première face dudit second élément, sans être soumis à aucune contrainte de flexion et/ou de torsion.

Avantageusement, pendant le piquage, ledit premier élément fibreux est maintenu par des parois latérales, renforçant l'action de cohésion transversale des fibres de direction au moins sensiblement parallèles à l'épaisseur du matelas en fibres et évitant qu'il éclate transversalement. De telles parois de maintien peuvent être rigides ou élastiques.

Le piquage sans nouage d'un fil continu peut aisément être réalisé par la mise en oeuvre des machines de piquage décrites dans les brevets américains US-A-4 863 660, US-A-4 917 756 et français FR-A-2 658 841.

Les points de piqûre sont répartis sur la largeur et la longueur dudit chant. Par exemple, ces points de piqûre sont obtenus au moyen de lignes de piquage parallèles (entre elles et aux bords dudit chant) dans lesquelles un point de piqûre se trouve à mi-distance entre deux points de piqûre d'une ligne de piquage adjacente. Il est avantageux de commencer par réaliser la ligne de piquage médiane, puis des lignes de piquage alternativement d'un côté et de l'autre de ladite ligne de piquage médiane en se rapprochant progressivement des bords du chant.

De préférence, la course de l'aiguille de piquage est réglée pour que les points de piquage pénètrent le plus possible dans ledit premier élément fibreux. De plus, il est avantageux que des fibres obliques soient introduites dans le gonflement dudit premier élément au voisinage dudit second élément.

On obtient ainsi une armature fibreuse pour une pièce de matière composite comportant au moins deux parois non coplanaires respectivement formées par un premier et un second éléments fibreux, appliqués l'un contre l'autre et solidarisés l'un de l'autre par des points de piqûre, cette armature étant caractérisée en ce que ledit premier élément fibreux est un matelas de fibres, en ce que ledit premier élément fibreux est appliqué par un de ses chants contre une face dudit second élément et en ce que des fibres transversales traversent ledit second élément et pénètrent dans ledit chant dudit premier élément.

Après réalisation de l'armature, on introduit, de toute manière connu, la matière de la matrice dans l'armature ainsi obtenue et on durcit ladite matière en maintenant ladite armature à la forme finale désirée.

Ainsi, conformément à la présente invention, le procédé pour la réalisation d'une pièce de matière composite comportant au moins deux parois non coplanaires, procédé selon lequel on réalise les premier et second éléments fibreux respectivement représentatifs desdites parois, on applique ledit premier élément fibreux contre une première face du second et on forme une armature fibreuse en solidarisant, par des points de piqûre, lesdits éléments fibreux entre eux en introduisant un fil continu à l'aide d'une aiguille à travers une seconde face dudit second élément, opposée à ladite première face, après quoi on introduit la matière d'une matrice dans l'armature fibreuse formée par lesdits éléments ainsi solidarisés, et on procède au durcissement de la matière de la matrice, en maintenant lesdits éléments solidarisés à la forme désirée pour ladite pièce, est caractérisé en ce que au moins ledit premier élément fibreux est réalisé en un matelas de fibres, en ce que ledit premier élément fibreux est appliqué par un de ses chants contre ladite première face dudit second élément et en ce que ledit fil continu est introduit par piquage sans nouage dudit fil continu pour que lesdits points de piqûre solidarisant entre eux lesdits premier et second éléments fibreux forment des fibres transversales traversant ledit second élément et pénétrant dans ledit chant dudit premier élément.

Les figures du dessin annexé feront bien comprendre comment l'invention peut être réalisée. Sur ces figures, des références identiques désignent des éléments semblables.

La figure 1 illustre schématiquement en perspective une armature fibreuse conforme à la présente invention comportant deux éléments fibreux individuels orthogonaux.

La figure 2 est une coupe agrandie suivant la ligne II-II de la figure 1.

La figure 3 montre en perspective du dessous une armature fibreuse semblable à celle de la figure 1.

La figure 4 montre un outillage pour la réalisation de l'armature fibreuse de la figure 3.

Les figures 5, 6 et 7 illustrent la réalisation de l'armature de la figure 3 à l'aide de l'outillage de la figure 4.

La figure 8 illustre schématiquement en perspective une machine de piquage pour la réalisation de l'armature des figures 1 et 3.

La figure 9 montre schématiquement en perspective un dispositif de piquage pour la machine de la figure 8.

Les figures 10 et 11 montrent, respectivement en coupe et en vue de dessus, une coque pouvant être réalisée conformément à l'invention.

La figure 12 montre, en perspective, une chape susceptible d'être réalisée conformément à la présente invention.

Les figures 13 et 14 illustrent schématiquement la réalisation de la chape de la figure 12, suivant deux coupes perpendiculaires.

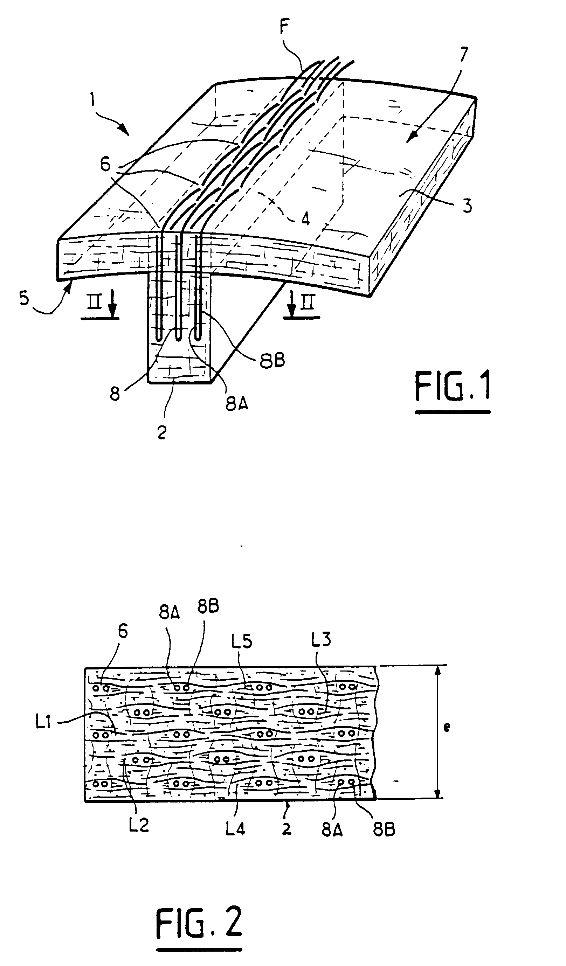

L'armature fibreuse 1, conforme à la présente invention et représentée schématiquement et partiellement sur la figure 1, comporte deux éléments fibreux individuels non coplanaires 2 et 3. Dans l'exemple représenté, ces éléments fibreux 2 et 3 sont orthogonaux.

Le premier élément fibreux 2 est appliqué par son chant 4 contre la face inférieure 5 du second élément fibreux 3 et des points de piqûre 6 solidarisent les éléments fibreux 2 et 3. Les points de piqûre 6 sont réalisés à l'aide d'un fil continu F et de la machine de piquage décrite ci-après, et ils traversent l'élément fibreux 3 par la face 7 de ce dernier opposée à la face 5, et pénètrent dans l'élément 2, par son chant 4.

Comme le montre également la figure 2, chaque point de piqûre 6 comporte une boucle de fil 8, dont les deux brins parallèles 8A et 8B sont insérés entre les fibres des éléments 2 et 3.

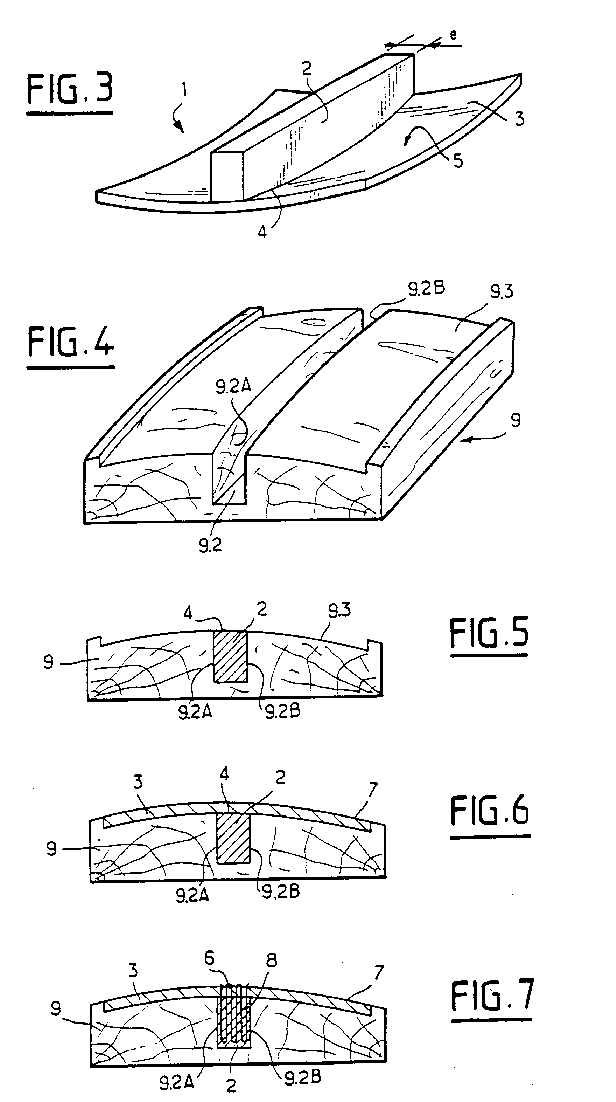

Pour obtenir le premier élément fibreux individuel 2, on commence par réaliser, par tout procédé connu, un matelas de fibres sèches. Ensuite, dans ce matelas, on découpe (à l'aide d'une scie à ruban, d'un jet d'eau, d'un laser, etc ...) ledit premier élément fibreux individuel 2, à la forme désirée. On remarquera que, grâce à ce procédé de découpe, le chant 4 de l'élément fibreux 2 peut être exactement ajusté à la forme de la face 5 de l'élément fibreux 3, de sorte qu'il n'y a aucune contrainte de flexion à exercer sur ledit élément fibreux 2 pour que son chant 4 épouse exactement la forme de la face 5. Ceci est illustré par la figure 3, sur laquelle on peut voir que le chant courbe 4 s'adapte parfaitement, sans effort, à la face 5.

Le matelas de fibres dans lequel est découpé l'élément fibreux 2 comporte les fibres constitutives qui peuvent être disposées de toute façon désirée en fonction des caractéristiques souhaitées pour l'armature 1 : par exemple, les fibres peuvent être disposées de façon organisée suivant plusieurs directions déterminées, ou bien elles peuvent être distribuées de façon aléatoire. Cependant, il comporte avantageusement des fibres transversales (non représentées) de direction au moins sensiblement parallèle à l'épaisseur e dudit matelas. Ainsi, ledit élément fibreux 2, grâce aux frottements interfibres avec lesdites fibres transversales, se tient bien par lui-même et le chant découpé 4 présente un bon état de surface. De plus, de telles fibres transversales contribuent à empêcher le chant d'éclater lors de l'introduction des points de piqûre 6.

Pour le maintien des éléments fibreux 2 et 3 pendant le piquage, on prévoit une forme rigide (en bois ou en métal par exemple), telle que celle représentée sur la figure 4, comportant une empreinte 9.2 pour l'élément fibreux 2 et une empreinte 9.3 pour l'élément fibreux 3, qui peut présenter toute structure connue (tissu, matelas de fibres, etc...). L'empreinte 9.2 présente la forme d'une fente dont la largeur est ajustée à l'épaisseur e de l'élément fibreux 2, de sorte que les faces 9.2A et 9.2B de ladite empreinte 9.2 maintiennent l'élément fibreux 2, en l'empêchant de s'ouvrir pendant le piquage. L'élément fibreux 2 est introduit dans l'empreinte 9.2, de façon que son chant 4 effleure le fond de l'empreinte 9.3 (figure 5). Ensuite, l'élément fibreux 3 est mis en place dans l'empreinte 9.3 (figure 6) et les points de piqûre 6 sont faits (figure 7).

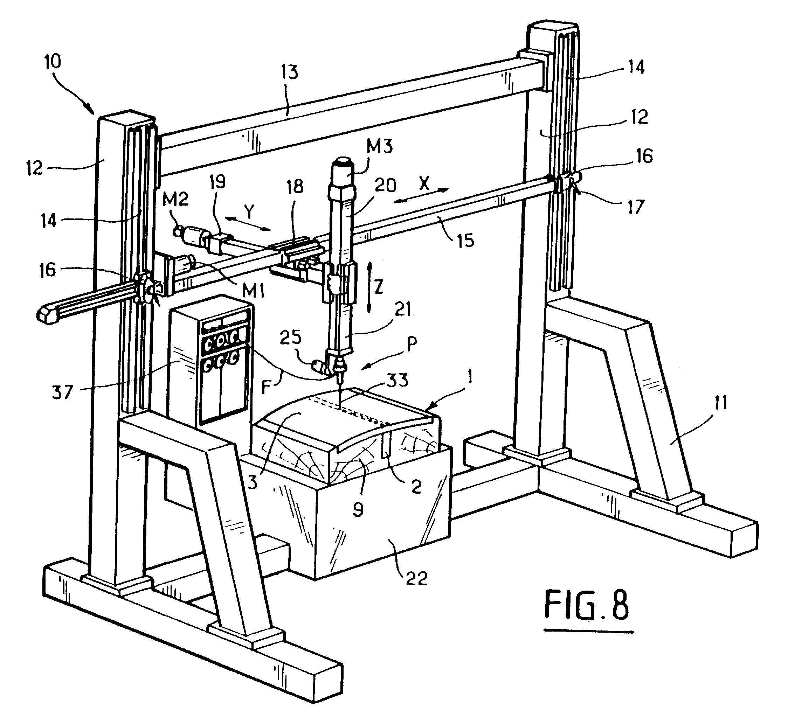

Pour réaliser les points de piqûre 6, on peut mettre en oeuvre la machine 10 ne nécessitant pas le nouage du fil F, illustrée schématiquement sur la figure 8 et décrite plus en détail dans les brevets américains US-A-4 863 660 et US-A-4 917 756.

Cette machine 10 comporte un bâti pourvu d'un piètement 11 et de montants verticaux 12, réunis à leur partie supérieure par une traverse horizontale 13.

Chaque montant vertical 12 comporte une glissière 14 et une barre transversale 15 fixée au voisinage de ses extrémités dans des coulisseaux 16 montés dans les glissières 14 dans lesquelles ils peuvent être immobilisés par des vis 17. Grâce à cet agencement, la barre 15 peut être réglée en hauteur sur les montants 12.

Sur la barre 15 est monté un chariot 18 sur lequel est monté un bras horizontal 19 coulissant transversalement et de façon réglable par rapport à la barre 15.

A l'une de ses extrémités, le bras horizontal 19 porte un bras vertical 20 également monté coulissant et de façon réglable.

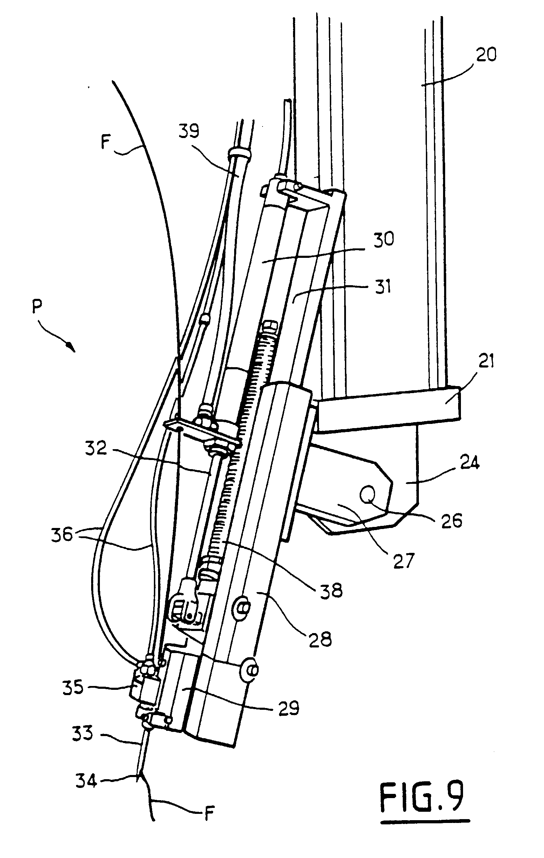

A son extrémité inférieure 21, le bras vertical 20 comporte des moyens de fixation adaptés pour recevoir un dispositif de piquage P, plus clairement visible sur la figure 9.

La machine comprend de plus un socle 22, supportant la forme 9 dans laquelle sont logés les éléments 2 et 3 de la façon décrite ci-dessus, en regard des figures 6 et 7.

On comprend que, grâce à l'agencement de la barre 15 et des bras 19 et 20, l'extrémité 21 peut être réglée dans toute position désirée par rapport à la forme 9, suivant trois axes orthogonaux X, Y et Z au moyen de moteurs M1, M2 et M3 qui sont représentés, à titre d'exemple, montés sur la barre 15 et aux extrémités des bras 19 et 20 et entraînent ceux-ci suivant ces trois axes par l'intermédiaire de systèmes connus appropriés à pignon et crémaillère, vis sans fin ou autres.

Comme le montre la figure 9, l'extrémité inférieure 21 du bras 20 comporte une patte 24 fixée dans son prolongement et sur laquelle est fixé un moteur électrique 25, par exemple un moteur pas-à-pas, dont l'arbre 26 horizontal s'étend à travers la patte 24.

On remarquera que le dispositif de piquage P peut être orienté dans un plan vertical, grâce à l'action du moteur 25.

Le dispositif de piquage P, monté sur l'extrémité inférieure 21 du bras vertical 20, comprend un support 27, fixé sur l'arbre 26, sur lequel est fixé un rail 28, un bloc 29 coulissant dans le rail 28, un vérin pneumatique 30 dont le cylindre est fixé sur un prolongement 31 du rail 28, solidaire de ce dernier et dont la tige de piston 32 est reliée au bloc 29.

Le bloc 29 porte une aiguille 33, décrite en détail dans les brevets américains précités.

L'extrémité de l'aiguille, opposée à sa pointe 34, est fixée à côté d'un pince-fil pneumatique de type connu 35 monté sur le bloc 29.

Le pince-fil 35 est relié par des conduits 36 à une source d'air comprimé (non représentée) et le fil de fibres F, provenant d'une source 37, alimente ladite aiguille 33.

Un ressort de rappel 38 est prévu entre le bloc 29 et le rail 28, de telle sorte que lorsque le vérin 30, alimenté par un tuyau 39, a poussé le bloc 29 en extension et est ensuite mis à l'échappement, le ressort 38 ramène le bloc 29 et l'aiguille en arrière.

On notera que, grâce au moteur M3 et/ou au vérin 30, on peut régler la profondeur de la pénétration de l'aiguille 33.

Comme cela est décrit dans les deux brevets américains précités, pendant l'introduction de l'aiguille 33 dans les éléments 2 et 3, le fil F est entraîné par ladite aiguille à travers lesdits éléments, le pince-fil 35 étant serré et la course de l'aiguille étant réglée de façon à pénétrer dans l'élément 2. Pendant le retrait de l'aiguille 33 hors de l'élément 2, le pince-fil est desserré et l'aiguille se retire en libérant le fil F au fur et à mesure à travers les éléments 2 et 3, en formant ainsi une boucle non fermée 8 qui est uniquement retenue par le frottement fibreux dans les éléments 2 et 3.

Ainsi, c'est grâce à la pression exercée par les fibres des éléments 2 et 3 sur la boucle 8 que, lors du retrait de l'aiguille, le fil F, qui défile librement dans l'aiguille pendant ce retrait, est retenu pour former la boucle ouverte 8.

Après l'avoir ressortie des éléments 2 et 3, on fait remonter l'aiguille au-dessus de la surface desdits éléments, d'une distance égale à l'épaisseur à piquer augmentée du pas de piquage, c'est-à-dire l'écartement désiré entre deux points de piqûre 6.

On actionne alors le pince-fil 35 pour bloquer le fil dans l'aiguille, on déplace le bras 20 d'un pas Y, et on actionne de nouveau le dispositif pour recommencer le cycle afin de former en continu une grande quantité de boucles 8 avec le même fil F, c'est-à-dire pour former les points de piqûre 6.

Bien entendu, en agissant sur les moteurs M1 et M2, on peut provoquer tout déplacement relatif désiré de l'aiguille 33 par rapport à l'armature 1, pour réaliser les points de piqûre 6.

Ainsi, les points de piqûre 6 peuvent être réalisés ligne longitudinale après ligne longitudinale, ou bien de toute autre manière. Si les points de piqûre sont réalisés ligne longitudinale après ligne longitudinale, il est avantageux de commencer par une ligne de piqûre médiane L1, puis de réaliser les autres lignes de piqûre alternativement d'un côté et de l'autre de ladite ligne de piqûre médiane L1 (L2 puis L3, puis L4, puis L5), comme cela est illustré sur a figure 2. On a remarqué qu'il était avantageux que les points d'une ligne de piqûre soient décalés longitudinalement par rapport aux points des lignes de piqûre adjacentes. A cet effet, un point de piqûre 6 d'une ligne peut être réalisé à mi-distance de deux points d'une ligne de piqûre adjacente.

La profondeur des points de piqûre 6 peut être ajustée grâce à l'action du moteur M3, pour que les boucles 8 pénètrent profondément dans l'élément 2 en assurant la solidarisation des éléments 2 et 3. De plus, la profondeur d'un point de piqûre peut être d'autant plus grande que ledit point de piqûre est plus proche du milieu de l'épaisseur du matelas 2.

On remarquera qu'ainsi, grâce à l'invention, il est possible d'éviter les raidisseurs en forme de cornière. En effet, dans de tels raidisseurs, l'aile d'appui sert à passer les efforts entre l'élément fibreux 3 et l'aile de raidisseur. Dans l'invention, on peut supprimer une telle aile d'appui, du fait que l'on peut créer suffisamment de points de piqûre 6 pour que l'ensemble des éléments fibreux 2 et 3 puisse être considéré comme monolithique.

Par ailleurs, on remarquera que, par action du moteur 18, on peut régler l'inclinaison de l'aiguille 33 autour de l'axe 26 et donc l'inclinaison désirée pour les points de piqûre 6. Il est donc facile de pouvoir incliner les boucles 8 dans l'élément fibreux 2, si cela est souhaité.

La machine 10 de la figure 8 est schématique et sa description n'a pour but que d'illustrer la présente invention et il est bien entendu possible, pour mettre en oeuvre l'invention, d'utiliser des machines plus complexes, comme celle par exemple décrite dans le brevet français FR-A-2 658 841 précité.

A la fin des opérations de piquage mentionnées ci-dessus, on obtient l'armature fibreuse 1, que l'on peut soumettre à toute opération connue d'élaboration d'une matrice, pour obtenir une pièce composite armature fibreuse-matrice.

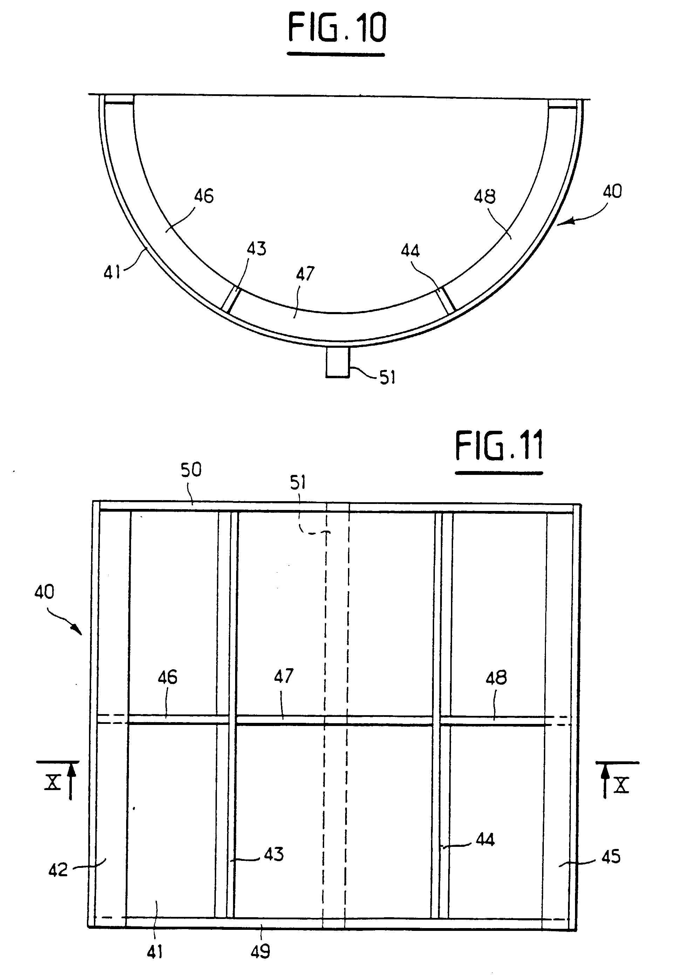

Sur les figures 10 et 11, on a illustré, à titre d'exemple non limitatif, une armature 40 en forme de coque, susceptible d'être réalisée conformément à l'invention, de la façon illustrée par les figures 1 à 9.

Cette coque 40 comporte une peau fibreuse 41 (comparable à l'élément fibreux 3) et une pluralité de nervures longitudinales et transversales ou les cadres fibreux 42 à 51, disposés aussi bien du côté de la concavité que de la convexité de la peau 41. Chaque élément fibreux 42 à 51 est comparable à l'élément fibreux 2 et il est solidarisé de la peau 41 par des points de piqûre 6 (non représentés).

La coque 40 est représentée sous forme hémicylindrique, mais il va de soi qu'elle pourrait présenter toute autre forme, par exemple celle d'une nacelle de réacteur, d'une partie de fuselage d'avion ou de coque de bateau.

La coque 40 étant de forme relativement compliquée, il peut être avantageux de réaliser sa forme de piquage (non représentée mais équivalente à la forme 9) en plusieurs parties assemblables et démontables.

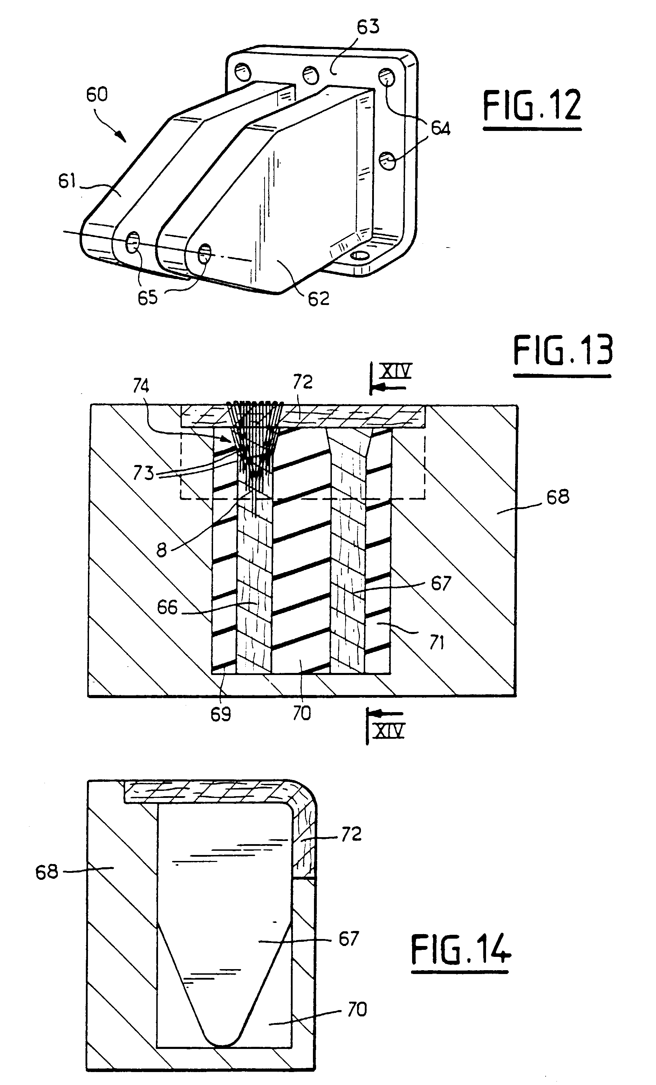

Sur la figure 12, on a représenté une chape de matière composite 60, comportant deux joues 61 et 62 reliées à une platine 63. Des trous 64 sont prévus dans la platine 63 pour la fixation de la chape 60, tandis que des trous 65 sont prévus à l'extrémité libre des joues 61 et 62, pour l'agencement d'un arbre (non représenté).

Pour réaliser une telle chape 60 conformément à l'invention, on commence par découper dans un matelas de fibres des éléments 66 et 67 (semblables au premier élément 2) que l'on introduit dans une forme 68 avec des entretoises de caoutchouc dur 69, 70 et 71, lesdites entretoises élastiques pressant entre elles, deux à deux, lesdits éléments 66 et 67. De plus, la forme 68 comporte l'empreinte pour un élément fibreux 72 (semblable au second élément 3) représentatif de la platine 63.

Puisque les entretoises 69, 70 et 71 sont élastiques, elles ne maintiennent pas rigidement les éléments fibreux 66 et 67, lors du piquage des éléments fibreux 66, 67 et 72. Par suite, les parties des éléments fibreux 66 et 67, voisines de l'élément fibreux 72, tendent à gonfler, comme cela est représenté en 74 sur la figure 13 pour l'élément 66. Il est alors possible d'introduire avec la machine décrite ci-dessus des points de piquage obliques 73, en plus des points de piquage 8.

Après piquage des éléments 66 et 67 sur l'élément 72, l'armature ainsi obtenue est pourvue de sa matrice, de toute façon connue, et, après rigidification de celle-ci, on procède au perçage des trous 64 et 65.

Bien que dans les exemples décrits ci-dessus, on ait montré des éléments fibreux orthogonaux, on comprendra aisément de ce qui précède que l'orthogonalité desdits éléments fibreux n'est pas un élément indispensable de l'invention et que celle-ci s'applique à des éléments fibreux non coplanaires quel que soit l'angle qu'ils forment.

## Revendications

1. Procédé pour la réalisation d'une armature fibreuse (1) pour une pièce de matière composite comportant au moins deux parois non coplanaires, procédé selon lequel on réalise des premier et second éléments fibreux (2,3) respectivement représentatifs desdites parois, on applique ledit premier élément fibreux (2) contre une première face (5) du second (3) et on solidarise, par des points de piqûre (6), lesdits éléments fibreux entre eux en introduisant un fil continu (F) à l'aide d'une aiguille à travers une seconde face (7) dudit second élément (3), opposée à ladite première face (5),
caractérisé en ce que au moins ledit premier élément fibreux (2) est réalisé en un matelas de fibres, en ce que ledit premier élément fibreux (2) est appliqué par un de ses chants (4) contre ladite première face (5) dudit second élément et en ce que ledit fil continu (F) est introduit par piquage sans nouage dudit fil continu pour que lesdits points de piqûre (6) solidarisant entre eux lesdits premier et second éléments fibreux forment des fibres transversales traversant ledit second élément (3) et pénétrant dans ledit chant (4) dudit premier élément (2).

2. Procédé selon la revendication 1,
caractérisé en ce que ledit matelas de fibres dudit premier élément fibreux comporte des fibres de direction au moins sensiblement parallèle à l'épaisseur dudit matelas de fibres.

3. Procédé selon l'une des revendications 1 ou 2,
caractérisé en ce que ledit premier élément fibreux (2) est découpé dans ledit matelas de fibres.

4. Procédé selon l'une des revendications 1 à 3,
caractérisé en ce que, pendant le piquage, ledit élément fibreux (2) est maintenu par des parois latérales (9.2A, 9.2B - 69, 70, 71).

5. Procédé selon la revendication 4,
caractérisé en ce que lesdites parois latérales (9.2A, 9.2B) sont rigides.

6. Procédé selon la revendication 4,
caractérisé en ce que lesdites parois latérales (69, 70, 71) sont élastiques.

7. Procédé selon la revendication 6,
caractérisé en ce que des fibres obliques (73) sont introduites dans le gonflement (74) dudit premier élément (66) au voisinage dudit second élément (72).

8. Armature fibreuse pour une pièce de matière composite comportant au moins deux parois non coplanaires respectivement formées par un premier et second élément fibreux (2,3), appliqués l'un contre l'autre et solidarisés l'un de l'autre par des points de piqûre (6),
caractérisée en ce que ledit premier élément fibreux (2) est un matelas de fibres, en ce que ledit premier élément fibreux est appliqué par un des ses chants (4) contre une face (5) dudit second élément et en ce que des fibres transversales (6) traversent ledit second élément (3) et pénètrent dans ledit chant (4) dudit premier élément (2).

9. Procédé pour la réalisation d'une pièce de matière composite comportant au moins deux parois non coplanaires, procédé selon lequel on réalise les premier et second éléments fibreux (2,3) respectivement représentatifs desdites parois, on applique ledit premier élément fibreux (2) contre une première face (5) du second (3) et on forme une armature fibreuse en solidarisant, par des points de piqûre (6), lesdits éléments fibreux entre eux en introduisant un fil continu (F) à l'aide d'une aiguille à travers une seconde face (7) dudit second élément (3), opposée à ladite première face (5), après quoi on introduit la matière d'une matrice dans l'armature fibreuse formée par lesdits éléments ainsi solidarisés, et on procède au durcissement de la matière de la matrice, en maintenant lesdits éléments solidarisés à la forme désirée pour ladite pièce,
caractérisé en ce que au moins ledit premier élément fibreux (2) est réalisé en un matelas de fibres, en ce que ledit premier élément fibreux (2) est appliqué par un de ses chants (4) contre ladite première face (5) dudit second élément et en ce que ledit fil continu (F) est introduit par piquage sans nouage dudit fil continu (F) pour que lesdits points de piqûre (6) solidarisant entre eux lesdits premier et second éléments fibreux forment des fibres transversales traversant ledit second élément (3) et pénétrant dans ledit chant (4) dudit premier élément (2).

## Patentansprüche

1. Verfahren zur Herstellung einer Faserarmierung (1) für ein Teil aus Verbundwerkstoff mit mindestens zwei nicht koplanaren Wänden, nach dem ein erstes und ein zweites Faserelement (2,3), die jeweils die Wände darstellen, ausgeführt werden, das erste Faserelement (2) an eine erste Seite (5) des zweiten Elements (3) angelegt wird und die Faserelemente miteinander durch Steppstiche (6) verbunden werden, indem ein Endlosfaden (F) mittels einer Nadel durch eine zweite Seite (7) des zweiten Elements (3), die der ersten Seite (5) entgegengesetzt ist, eingeführt wird,
dadurch gekennzeichnet, daß mindestens das erste Faserelement (2) aus einem Faservlies besteht, dadurch, daß das erste Faserelement (2) mit einer seiner Schmalseiten (4) an die erste Seite (5) des zweiten Elements angelegt wird, und dadurch, daß der Endlosfaden (F) durch Steppen ohne Verschlingung des Endlosfadens eingeführt wird, damit die Steppstiche (6), durch die das erste und das zweite Faserelement miteinander verbunden werden, Querfasern bilden, die durch das zweite Element (3) verlaufen und in die Schmalseite (4) des ersten Elements (2) eindringen.

2. Verfahren nach Anspruch 1,
dadurch gekennzeichnet, daß das Faservlies des ersten Faserelements Fasern hat, die mindestens annähernd parallel zur Dicke des Faservlieses verlaufen.

3. Verfahren nach einem der Ansprüche 1 oder 2,
dadurch gekennzeichnet, daß das erste Faserelement (2) aus dem Faservlies ausgeschnitten wird.

4. Verfahren nach einem der Ansprüche 1 bis 3,
dadurch gekennzeichnet, daß das Faserelement (2) während des Steppens durch Seitenwände (9.2A, 9.2B - 69, 70, 71) gehalten wird.

5. Verfahren nach Anspruch 4,
dadurch gekennzeichnet, daß die Seitenwände (9.2A, 9.2B) starr sind.

6. Verfahren nach Anspruch 4,
dadurch gekennzeichnet, daß die Seitenwände (69, 70, 71) elastisch sind.

7. Verfahren nach Anspruch 6,
dadurch gekennzeichnet, daß in die Aufweitung (74) des ersten Elements (66) in der Nähe des zweiten Elements (72) schräge Fasern (73) eingeführt werden.

8. Faserarmierung für ein Teil aus Verbundwerkstoff mit mindestens zwei nicht koplanaren Wänden, die jeweils durch ein erstes bzw. zweites Faserelement (2,3) gebildet, aneinander angelegt und miteinander durch Steppstiche (6) verbunden werden,
dadurch gekennzeichnet, daß das erste Faserelement (2) ein Faservlies ist, dadurch, daß das erste Faserelement mit einer seiner Schmalseiten (4) an eine Seite (5) des zweiten Elements angelegt wird, und dadurch, daß Querfasern (6) durch das zweite Element (3) verlaufen und in die Schmalseite (4) des ersten Elements (2) eindringen.

9. Verfahren zur Herstellung eines Teils aus Verbundwerkstoff mit mindestens zwei nicht koplanaren Wänden, nach dem das erste und zweite Faserelement (2,3), die jeweils die Wände darstellen, hergestellt werden, das erste Faserelement (2) an eine erste Seite (5) des zweiten Elements (3) angelegt wird und eine Faserarmierung gebildet wird, indem die Faserelemente miteinander durch Steppstiche (6) verbunden werden, indem ein Endlosfaden (F) mit einer Nadel durch eine zweite Seite (7) des zweiten Elements (3), die der ersten Seite (5) entgegengesetzt ist, eingeführt wird, danach der Werkstoff einer Matrix in die Faserarmierung der so verbundenen Elemente eingebracht wird und der Matrixwerkstoff ausgehärtet wird, wobei die verbundenen Elemente in der für das Teil gewünschten Form gehalten werden,
dadurch gekennzeichnet, daß mindestens das erste Faserelement (2) aus einem Faservlies besteht, dadurch, daß das erste Faserelement (2) mit einer seiner Schmalseiten (4) an die erste Seite (5) des zweiten Elements angelegt wird, und dadurch, daß der Endlosfaden (F) durch Steppen ohne Verschlingung des Endlosfadens (F) eingeführt wird, damit die Steppstiche (6), durch die das erste und zweite Faserelement miteinander verbunden werden, Querfasern bilden, die durch das zweite Element (3) verlaufen und in die Schmalseite (4) des ersten Elements (2) eindringen.

## Claims

1. Method for producing a fibrous reinforcement (1) for a component of composite material comprising at least two non-coplanar walls, according to which method first and second fibrous elements (2, 3) are produced, which represent respectively said walls, said first fibrous element (2) is applied against a first face (5) of the second fibrous element (3) and said fibrous elements are joined together, by means of stitches (6), by inserting a continuous filament (F) by means of a needle through a second face (7) of said second element (3), on the opposite side to said first face (5), characterized in that at least said first fibrous element (2) is produced as a fibre mat, in that said first fibrous element (2) is applied via one of its narrow sides (4) against said first face (5) of said second element and in that said continuous filament (F) is inserted by the stitching without knotting of said continuous filament so that said stitches (6) joining said first and second fibrous elements together form transverse fibres passing through said second element (3) and penetrating into said narrow side (4) of said first element (2).

2. Method according to Claim 1, characterized in that said fibre mat of said first fibrous element comprises fibres in a direction at least substantially parallel to the thickness of said fibre mat.

3. Method according to one of Claims 1 and 2, characterized in that said first fibrous element (2) is cut out of said fibre mat.

4. Method according to one of Claims 1 to 3, characterized in that, during stitching, said fibrous element (2) is held by lateral walls (9.2A, 9.2B - 69, 70, 71).

5. Method according to Claim 4, characterized in that said lateral walls (9.2A, 9.2B) are rigid.

6. Method according to Claim 4, characterized in that said lateral walls (69, 70, 71) are elastic.

7. Method according to Claim 6, characterized in that oblique fibres (73) are inserted into the swelling (74) of said first element (66) near said second element (72).

8. Fibrous reinforcement for a component of composite material comprising at least two non-coplanar walls respectively formed by a first and a second fibrous element (2, 3) which are applied against each other and joined together by stitches (6), characterized in that said first fibrous element (2) is a fibre mat, in that said first fibrous element is applied via one of its narrow sides (4) against one face (5) of said second element and in that transverse fibres (6) pass through said second element (3) and penetrate into said narrow side (4) of said first element (2).

9. Method for producing a component of composite material comprising at least two non-coplanar walls, according to which method the first and second fibrous elements (2,3) are produced, which represent respectively said walls, said first fibrous element (2) is applied against a first face (5) of the second fibrous element (3) and a fibrous reinforcement is formed by joining together, by means of stitches (6), said fibrous elements, by inserting a continuous filament (F) by means of a needle through a second face (7) of said second element (3), on the opposite side to said first face (5), after which the material of a matrix is inserted into the fibrous reinforcement formed by said elements thus joined together, and the material of the matrix is cured, keeping said joined together elements in the desired shape for said component, characterized in that at least said first fibrous element (2) is produced as a fibre mat, in that said first fibrous element (2) is applied via one of its narrow sides (4) against said first face (5) of said second element and in that said continuous filament (F) is inserted by the stitching without knotting of said continuous filament (F) so that said stitches (6) joining said first and second fibrous elements together form transverse fibres passing through said second element (3) and penetrating into said narrow side (4) of said first element (2).
